# EUROPEAN PATENT APPLICATION

(11) **EP 4 768 215 A1**
(43) Date of publication of application: **01.07.2026**
(21) Application number: 25227397.4
(22) Date of filing: 29.12.2025
(51) Int. Cl.: B29C 33/30, D21J 3/00

(54) **STOP-LOCK DEVICE FOR A THERMOFORMING HALF-MOULD**

(30) Priority: 30.12.2024 IT 202400030132
(71) Applicant: FTT S.r.l., 37139 Verona (VR) (IT)
(72) Inventor: DAL ZOVO, Nicolò, I-37067 Valeggio Sul Mincio (VR) (IT); FAVARO, Mansueto, I-31100 Treviso (TV) (IT); MARANGONI, Alex, I-37030 Mezzane di Sotto (VR) (IT)
(74) Representative: Dragotti & Associati S.P.A.

(57) **Abstract**

A stop-lock device for a thermoforming half-mould comprises a pin (70) configured to be engaged with a forming half-mould (10, 20) and comprising a hole (72) at one of its ends. The device further comprises an actuation mechanism configured to be engaged with an operational plate (30, 40, 100) associated with the thermoforming half-mould (10, 20), and comprising an actuator (55) and at least one longitudinal bolt (60) connected to the actuator (55) and configured to be inserted into the through opening (72) of the pin (70) for the selective locking of the half-mould (10, 20) to one of said operational plates (30, 40, 50, 100).

## Description

The present invention relates to the sector of fibre moulding machinery, and in particular to machinery for thermoforming cellulose slurries for the production of objects of various use. The invention has been developed with particular reference to a stop-lock device for a thermoforming half-mould and a hot moulding assembly with stop-lock device.

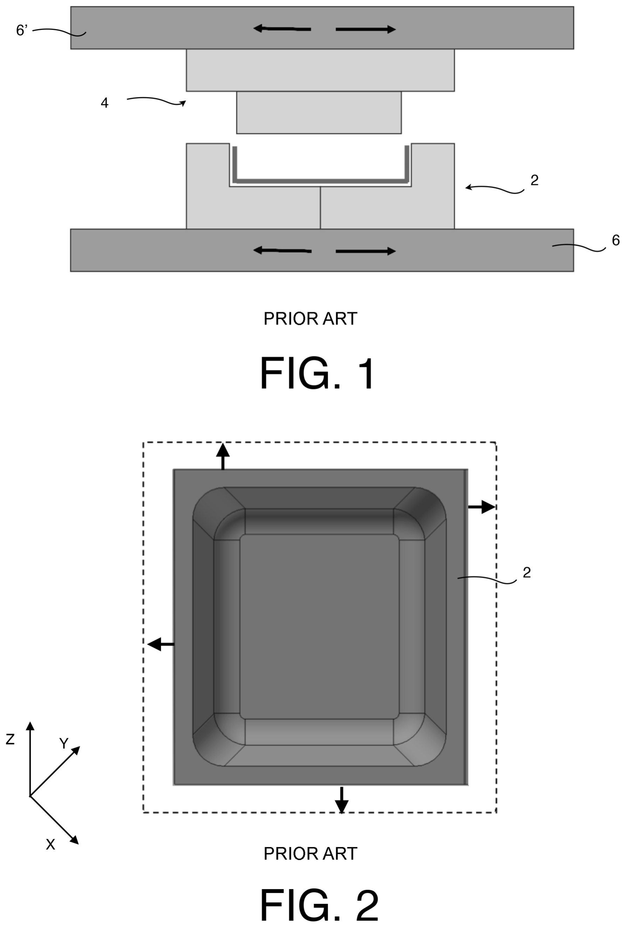

In the sector of moulding fibres by thermoforming, use is usually made of moulding assemblies, as illustrated in Figure 1, which comprise at least one mould, in turn consisting of two half-moulds, i.e. a half-mould, or matrix 2, which can be mounted below or above, and a second half-mould, or punch 4, to be mounted in a position opposite to the first. A layer of fibre slurry having a high-water content and previously preformed at a process stage called "forming", located upstream, is arranged inside the matrix 2. Subsequently, either one or both of the half-moulds are driven towards each other until both half-moulds come into contact with said slurry layer exerting a pressing action in order to make the desired product.

The thermoforming process requires that said half-moulds 2, 4 be heated to transfer to the product the energy necessary for the removal, by evaporation, of the water originally contained in the slurry. In addition, the same half-moulds 2, 4 are provided with holes adapted to evacuate the steam thus generated, thanks to the vacuum draught.

The transfer of energy to the moulds can take place "directly" or "indirectly". In the first case, the heat sources (for example, the electrical resistors or a circulation of diathermic oil previously brought to temperature, etc.) are incorporated directly into the half-moulds 2, 4. In the second case, on the other hand, the heat sources are incorporated in a so-called "heating plate" 6, which is kept in contact with the relative half-mould 2, 4, heating it. In this case, the efficiency of heat transmission between two facing metal surfaces is dependent on the flatness of said surfaces, as well as their roughness, but also on the force with which said surfaces are pressed against each other.

The solutions of known type, however, have some drawbacks. Due to the thermal energy used for the thermoforming process, the two half-moulds, usually made of metallic material, absorb part of that energy and, consequently, change their volume and/or their shape as a function of temperature variation. In other words, the half-moulds alter their geometry and also their position, according to effects defined below as "primary thermal expansion" and "secondary thermal expansion".

Typically, in known technology, in the indirect heating solution, said half-moulds 2, 4 are fixed to a respective heating plate 6 by means of screws placed perimetrically thereto so that they do not interfere with the active surface of the same half-moulds 2, 4, which is the one responsible for giving the final shape to the product. In this case, the inevitable thermal expansion resulted from heating the half-moulds 2, 4, will find an obstacle in this type of fixing and therefore, since said expansion must in any case "be accommodated", it ends up incurring uncontrolled and unwanted deformations (thermal shape instability) of the half-moulds, for example in the direction of the axis Z, the one perpendicular to the presser of the press. They are very damaging because they lead to localised inconsistencies in the thickness and density of the finished products.

The moulds for thermoforming can take on different configurations depending on the objects-products to be made and their arrangement inside the thermoforming press. Only two cases are reported here that are useful for describing the disadvantages associated with the configuration of the moulds, it being understood that other combinations are possible, which however are not immune to the problems connected with primary and secondary thermal expansion, to which the invention must provide solutions.

For example, it may occur that a mould is designed for the realization of a single object and in this case below reference will be made to a "single-cavity" mould or half-mould. Otherwise, a mould can be designed for the realization of several separate objects, in which case reference will be made to a "multi-cavity" mould or half-mould.

Figure 2 shows a single-cavity mould, which, by expanding due to the increase in temperature resulting from the aforementioned heat input, gives rise to a primary thermal expansion effect, according to which the mould cavity will increase in size in the directions X, Y, and Z. If said half-moulds 2, 4 were fixed to a respective heating plate 6 by means of screws placed perimetrically thereto, the expansion would be counteracted by said screw fixings especially in the directions X and Y, where the effects of the expansion itself would be greater since the dimensions of the half-mould are typically much larger in the direction of said two than in the third axis Z, and therefore an elastic constraint phenomenon would be introduced resulting in a deformation of the mould according to the directrix Z.

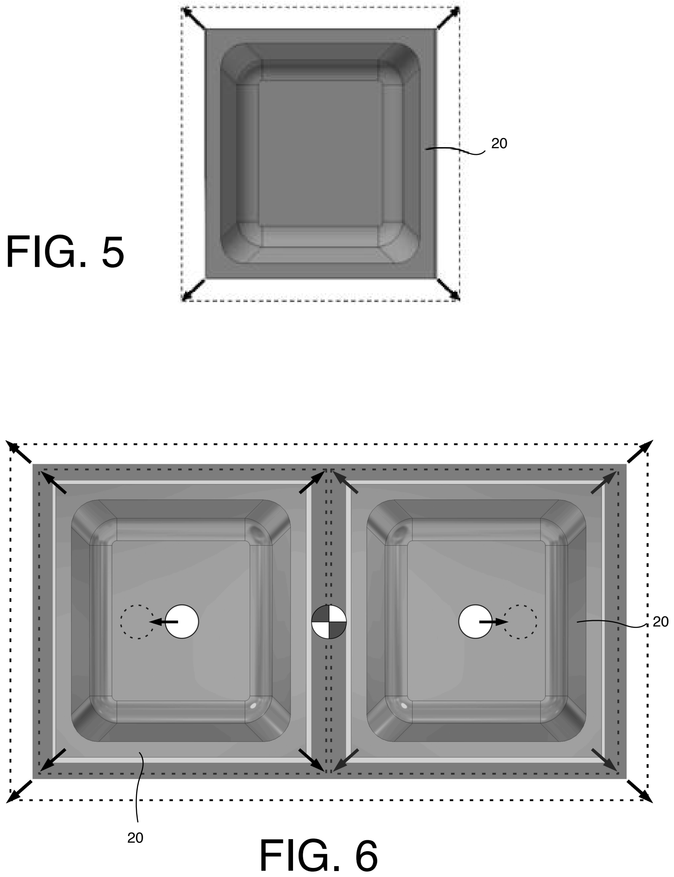

Fig. 6, on the other hand, is intended to represent a multi-cavity mould (two in this case), which are part of the same mould. In this case, in addition to incurring a primary expansion effect, for which said cavities will each increase their size in the directions X and Y, and Z, by thermal expansion, the secondary thermal expansion effect will manifest itself, which, given the cavity centre not coinciding in plan with the mould centre, from which the expansion departs, leads to the displacement of the centres of the individual cavities with respect to their position when "cold" due to the increase in size of the entire mould by thermal effect.

However, it should be noted that, even if one wants to "break" down the given multi-cavity half-mould, for example, into two independent single-cavity half-moulds, if they were constrained to the same heating plate, one would still run into the problem of expansion, here defined as tertiary, since the half-moulds would translate following the expansion of the heating plate itself.

Typically, both the heating plates and the moulds themselves are made of aluminium alloy by virtue of the high thermal conductivity of that metal, which is combined with a cost considered convenient compared to other solutions.

Aluminium alloys have a very high coefficient of thermal expansion, which stands at about 2.2 - 2.4 mm for an aluminium bar one metre long and for a temperature increase of 100°C.

It must be taken into account that, inevitably, during the thermoforming process, one of the two half-moulds will end up providing, with its own energy input, most of the drying effect, which involves different temperature variations between punch and matrix, which, in turn, are not fully controllable through the automatic modulation of energy delivery.

Not even the negative effects resulting from primary and, even worse, secondary expansion, can be completely controlled through a possible "cold" pre-dimensioning of the half-moulds that takes into account beforehand the relative increases in size due to the thermal effect.

Taking into account that the thickness of the products to be made is typically in the order of tenths of a millimetre, it will be understood that, given the considerable dilatability of the aluminium metal already treated, a dimension in plan of the half-moulds by a few centimetres will suffice to bring into play primary and secondary expansions of an order of magnitude such as to interfere, beyond the acceptable range, with the thickness of the product, even in the presence of temperature differentials of only a few tens of °C.

The same concepts also apply to the translation of moulds due to tertiary effect.

Another drawback found in the current technology refers to the fact that the half-moulds are subject to frequent disassembly and re-assembly in the machine, mainly due to the recurrent need to clean them, in addition to the changes of object to be produced.

These disassemblies/re-assemblies result in prolonged machine stops, which can be mainly related to the screwed fixings of the half-moulds, the need to wait for cooling in order to be able to carry out the interventions safely and, finally, the need to achieve a "balanced" thermal regime after new heating.

General aims of the present invention are, therefore, to realize a hot moulding assembly with a stop-lock device such as:
- to avoid problems of elastic constraint of the half-moulds that cause unwanted deformations thereof in the third directrix Z due to shape instability;
- not to interfere with the active surface of the half-mould, the one responsible for giving the final shape to the product;
- to be able to generate an "abutment" force of the half-mould to the heating plate comparable to that obtainable with traditional fixings, in order to thereby optimise heat transfer;
- to avoid tertiary expansion effects due to the translation of the half-moulds;
- to allow the use of half-moulds independent from one another, avoiding multi-cavity solutions as much as possible;
- to facilitate as much as possible the disassembly and re-assembly of the moulds in order to minimise production downtime and allow the operator to intervene in maximum safety;
- to allow rapid disassembly and re-assembly of the half-moulds, which, when re-assembled, must immediately find their centring and be free to thermally dilate in the directrices X and Y;
- to allow the release and subsequent re-constraint of the half-mould to the machine, respectively for disassembly and re-assembly, to be carried out directly from the operator panel of the machine itself, facilitating the intervention of the operator as much as possible, without exposing him/her to the risk of contact with hot surfaces.

In view of this purpose, the Owner has thought of realizing, according to the invention, a hot moulding assembly with a stop-lock device as defined in claim 1. The dependent claims define further innovative features of the present invention. Further features and advantages of the present invention will be evident from the following description.

Reference will now be made in detail to the various embodiments of the invention, one or more examples of which are illustrated in the accompanying figures, in which:
- Figure 1 is a schematic side view of a moulding assembly of known type;
- Figure 2 is a top view of a single-cavity half-mould of known type subjected to primary thermal expansion;
- Figure 3 is a schematic sectional view of a stop-lock device for a first thermoforming half-mould according to one of the embodiments of the present invention;
- Figure 4 is a schematic sectional view of a stop-lock device for a second thermoforming half-mould according to the embodiment of Figure 3;
- Figure 5 is a top view of a single-cavity half-mould according to the embodiment of Figure 3 subjected to primary thermal expansion;
- Figure 6 is a top view of a multi-cavity half-mould subjected to secondary thermal expansion;
- Figure 7 is a top view of a multi-cavity half-mould subjected to tertiary thermal expansion;
- Figure 8 is a schematic sectional view of a further embodiment of a hot-moulding assembly with stop-lock device according to the present invention;
- Figure 9 is a schematic sectional view of another embodiment of a stop-lock device according to the present invention;
- Figure 10 is a schematic sectional view of a further embodiment of the stop-lock device according to the present invention; and
- Figure 11 is a schematic sectional view of another embodiment of the stop-lock device according to the present invention.

Identical reference numbers have been used when possible to identify common identical elements in the drawings to facilitate comprehension. It is to be understood that elements and characteristics of one embodiment may conveniently be incorporated into other embodiments without further clarifications.

Each example is provided merely to illustrate the invention and is not intended as a limitation thereof. For example, the technical characteristics illustrated or described because they belong to one embodiment may be implemented in, or in association with, other embodiments in order to generate a further embodiment. It is understood that the present invention is comprehensive of such modifications and variants.

It is to be understood that elements and characteristics of one embodiment may conveniently be incorporated into other embodiments without further clarifications.

In the following, the description of the advantages of the invention will refer to the "indirect" heating version, it being understood that they find equal applicability, *mutatis mutandis,* also to the "direct" heating solution.

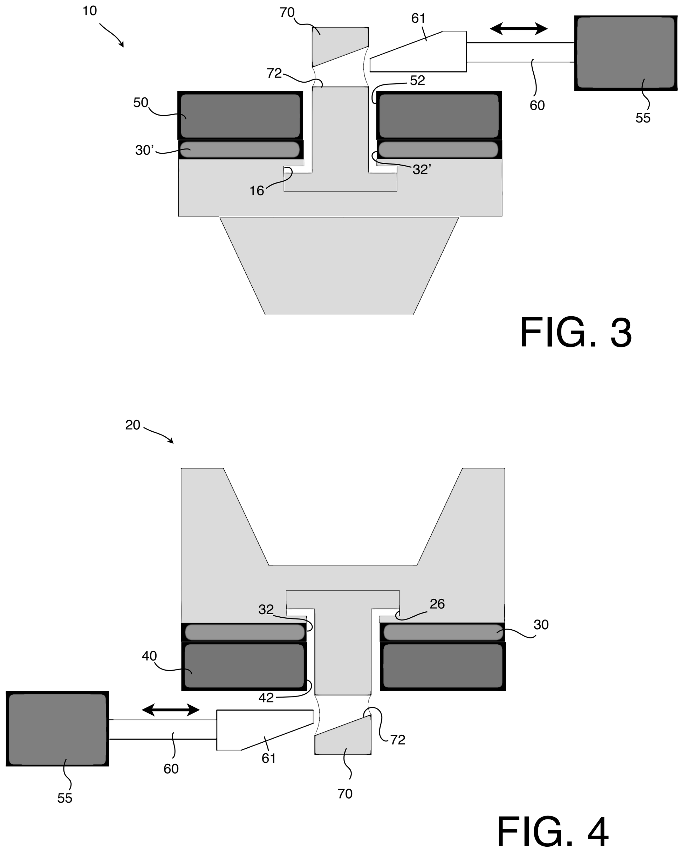

According to embodiments of the present invention illustrated in Figures 3 and 4, a hot moulding assembly comprises a first half-mould 10, punch or matrix, and a second half-mould 20, matrix or punch, configured to operate with each other. In the attached figures, a single-cavity mould is depicted, and the first half-mould 10 is configured as a punch and arranged above the second half-mould 20, configured as a matrix, but, of course, different configurations and arrangements of the half-moulds 10, 20 may be provided with respect to those described and illustrated without thereby departing from the scope of the present invention. Each half-mould 10, 20 comprises an active surface configured to replicate the shape of the finished object-product to be made.

According to a first of the embodiments of the present invention, illustrated in Figures 3 and 4, a stop-lock device for a thermoforming half-mould, generically indicated with 1, comprises an actuation mechanism, comprising in turn an actuator 55, and a longitudinally elongated bar, or bolt 60, connected to the actuator 55.

The embodiments described below concern a motorized solution of the stop-lock device 1, but it should be noted that a manual locking system will represent, *mutatis mutandis,* an obvious variant with reduced performance.

For example, the actuator may be an electric motor 55 comprising a motor shaft connected to a linear module to which the bolt 60 is connected. Of course, in addition to the electric motor, different actuation systems and different transmission, as well as motion transformation mechanisms can be used, without thereby departing from the scope of the present invention, however, the electric motor system coupled to the screw-spindle mechanism remains what has proved to be preferable in terms of simplicity and effectiveness.

The stop-lock device for a thermoforming half-mould 1 is configured to cooperate with a pin 70 engaged with a thermoforming half-mould 20.

From the description as a whole, and from the figures, it is in fact clear that, although the pin 70 functionally cooperates with the stop-lock device 1, it is structurally fixed to or integrated into the half-mould 10, 20. Therefore, in the context of the present description, the lock device is to be understood as the set of the active elements, actuator 55 and bolt 60, acting on the pin 70, while the pin 70 is to be considered as a component of the half-mould 10, 20.

An end portion of the pin 70 comprises a hole 72, with a substantially quadrilateral shaped section, made in a direction orthogonal with respect to the axis of the pin 70 itself, and configured to receive the bolt 60.

According to embodiments, the hole 72 comprises an inclined wall with respect to the axis of the hole itself and the bolt 60 comprises, at one of its ends, a chamfer 61 adapted to replicate an inclined plane with an inclination complementary to that of the inclined wall formed in the hole 72 of the pin 70.

As will appear even more clearly below, it is highlighted how a fundamental aspect of the invention resides in the fixing of the pin 70 to the half-mould 10, 20 in a position such that its longitudinal axis coincides with the central axis of the half-mould 10, 20 since it allows a free expansion of the half-mould 10, 20 itself in the directions X and Y, those parallel to the presser, without "oppositional" constraints in said directions, such as to induce undesired phenomena of thermal shape instability due to elastic constraint with the fixing system. Obviously, such a fixing system must not interfere with the active surface of the half-mould 10, 20 and can be made in different ways, for example the pin 70 can be made as an integral part of the half-mould 10, 20, or screwed or otherwise engaged with it.

Preferably, each half-mould 10, 20 comprises a recess 16, 26 configured to house a fixing end of a pin 70 of the stop-lock device 1. Preferably, the fixing end 71 is flange-shaped and is fixed to the bottom of the recess 16, 26 by means of fixing screws, in such a way that the pin 70 extends perpendicularly to a "facing" surface of the half-mould 10, 20, i.e. a surface arranged facing the heating plate 30, 30', i.e. the technical plate 40, 50 in the case of direct heating.

According to a preferred feature of the present embodiment, the recess 16, 26 is formed in the centre of the half-mould 10, 20, and so that the longitudinal axis of the pin 70 coincides with the central axis of the half-mould 10, 20 itself, even more preferably the recess 26 is formed at the centre of the single cavity of the half-mould 20 of the matrix.

Each half-mould 10, 20 is connected to a plurality of operational plates, which consists, in the case of an indirect heating system, of a heating plate 30, 30' (not present in the case of direct heating), and of at least one "technical plate" 40, 50, provided with channellings for steam evacuation and the injection of compressed air for unmoulding the thermoformed products.

The technical plates 40, 50, and the heating plates 30, 30' in case of indirect heating, each comprise at least one through opening, preferably a through opening formed in the geometric centre of each of said plates. The technical plates 40, 50 respectively comprise a through opening 42, 52 and the heating plates 30, 30' respectively comprise a through opening 32, 32'.

The same stop-lock device 1 described above is preferably applied to both the first half-mould 10 and the second half-mould 20. In this sense, the actuation mechanism, actuator 55 and bolt 60, of the stop-lock device 1 can find its anchoring base either on the heating plate 30, 30' (less conveniently since this would limit the extension of the vacuum and air-compressed channels to be formed inside the technical plate) or on the technical plate 40, 50, and the bolt 60 is arranged horizontally aligned with the through opening 72 of the pin 70 so that it is configured to be inserted inside the through opening 72.

In use, when the half-mould is assembled in the machine, the pin 70 is inserted inside the through openings 42, 52, 32, 32', coaxial with each other, with which the respective heating plates 30, 30' and technical plates 40, 50 are provided, until it protrudes from the latter for a section comprising the hole 72.

Consequently, the length of the pin 70 will be more or less extended since it must be limited to protruding from the plate chosen as the anchoring base of the actuation mechanism.

Likewise, the pin 70 must find its reference centring in the same plate chosen for anchoring the actuation mechanism, in order to thereby maintain the mutual position between the pin 70 and the bolt 60 in all operating conditions, so as to avoid difficulties in inserting and disengaging the bolt 60 with its own inclined plane in/from the hole 72 provided in turn with an inclined plane made in the pin 70 itself.

Before starting the thermoforming process, the electric motor 55 is operated to bring one end of the bolt 60 inside the through opening 72 of the pin 70 and, in this way, lock the pin 70 to the heating plate 30, 30' or to the technical plate 40, 50 (in case of direct heating).

In embodiments in which the opening 72 comprises an inner surface with an inclined upper wall, and the bolt 60 is provided at one of its ends 61 with a chamfer adapted to replicate an inclined plane with an inclination complementary to that formed in the hole 72 of the pin 70, the bolt 60 is led orthogonally to the axis of the pin 70 until the two inclined planes come into contact. In this way the force applied according to the direction of the axis of the bolt 60, and perpendicular to the axis of the pin 70, will result in a direct force in the direction of the axis of the pin 70 itself, according to a multiplication ratio between the first and the second force depending on the inclination of the inclined planes.

This solution, designed for generating a "facing" force between half-mould 10, 20 and heating plate 30, 30', as well as for realizing a system for fixing the first to the second at the centre of the first and adapted to meet all the technical improvements required and discussed above, proved to be the simplest and most convenient construction for the specific application. Of course, other technically equivalent solutions could be adopted, such as a worm-wheel mechanism, without thereby departing from the scope of the present invention.

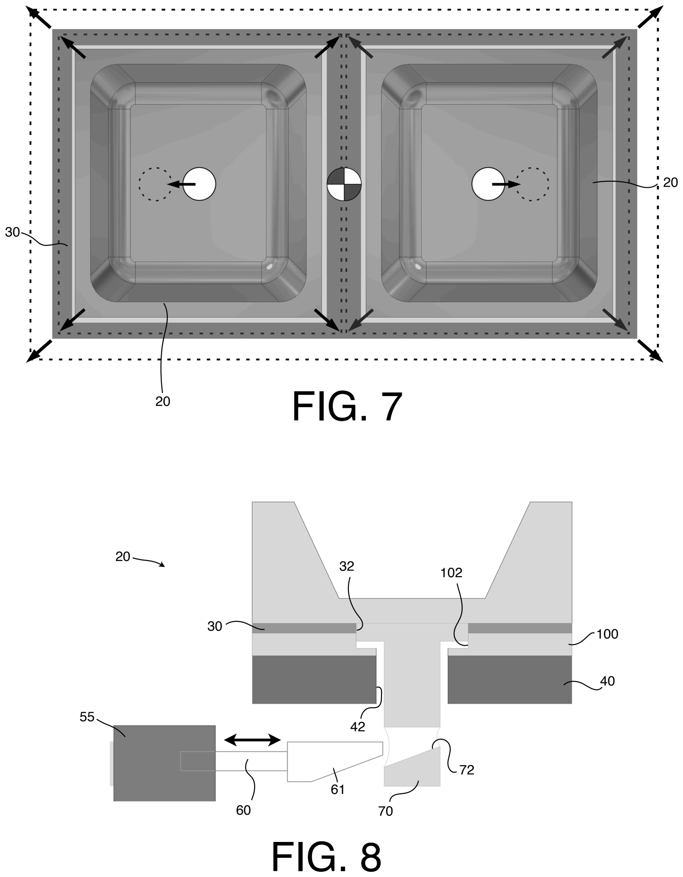

According to another embodiment of the present invention, illustrated in Figure 8, a thermoforming moulding assembly also comprises one or more insulating plates 100, adapted to limit the dispersion of heat towards the structural elements of the thermoforming machine (movable presser and fixed reaction plate, or in turn movable). In the illustrated embodiment, the insulating plates are preferably arranged interposed between the heating plate 30, 30' and the technical plate 40, 50, but, of course, different arrangements of said insulating plates 100 may be provided without thereby departing from the scope of the present invention. The insulating plate 100 comprises at least one through opening 102 inside which the pin 70 of the stop-lock device is inserted.

Always according to this embodiment, the stop-lock device is engaged with the insulating plate 100, and the bolt 60 is arranged horizontally aligned with the through opening 72 of the pin 70 so that it is configured to be inserted inside the through opening 72.

Preferably, the insulating plate 100 can be made of materials that, in addition to offering very low thermal (precisely, insulating) conductivity, guarantee mechanical characteristics that, at the temperatures of use, remain higher than those of aluminium, but which, above all, enjoy minimal thermal expansion coefficients, even in the order of magnitude of 10⁻⁶ °C⁻¹. Since, therefore, the expansion of said plates is actually negligible with respect to the precision levels imposed by the good alignment of the two half-moulds 10, 20, it can be assumed that the positioning of the half-moulds 10, 20 in the machine remains unchanged regardless of the temperatures involved.

A further development of the stop-lock device described above consists in allowing the locking of, for example, two independent half-moulds realizing the same concept of bolt locking, starting from the same and common actuation means (e.g. electric motor).

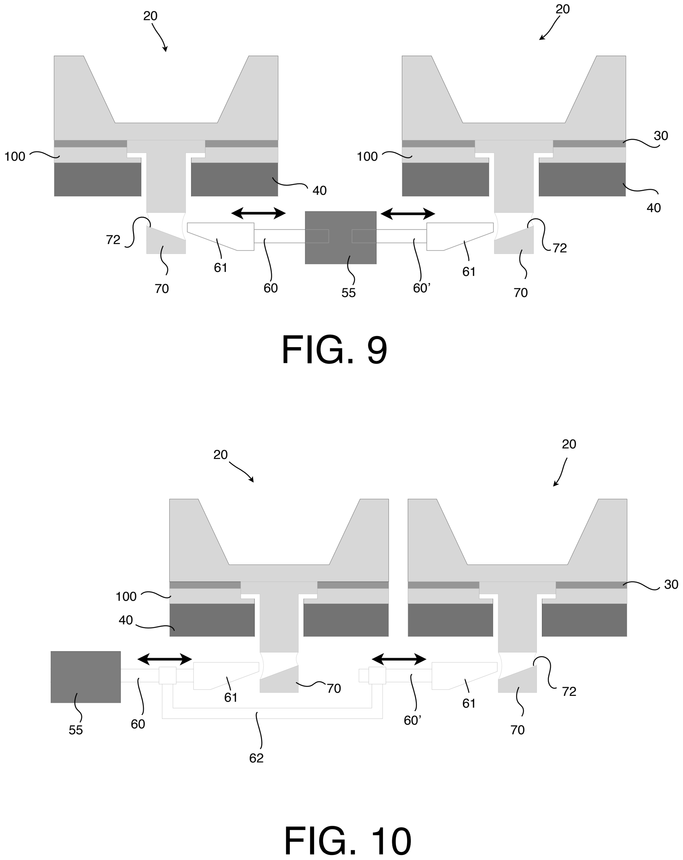

This can be realized, as for example illustrated in Fig. 9, with a double bolt system with a first bolt 60 and a second bolt 60', where the actuation mechanism comprises a transmission mechanism with two lead screws, connected to an actuator 55, for example an electric motor, and each connected to a respective bolt 60, 60'. Said lead screws are oppositely threaded (right-handed and left-handed) so that, starting from the same rotary drive imposed by the electric motor 55, the advancement of the bolts 60, 60' is induced in two mutually opposite directions. A further possible solution is illustrated in Figure 10 where a different transmission mechanism is depicted.

Other solutions suitable for fixing more than two half-moulds starting from the same actuator are feasible and constitute an obvious extension of the fixing concept expressed herein, even if they could turn out as inconvenient due to their overall dimensions.

The double bolt embodiments described above, for example with reference to Figures 9 and 10, may be further improved in relation to a potential criticality arising from the rigid kinematics of the mechanisms in which the common actuator 55 simultaneously drives a plurality of bolts 60, 60'. In such actuation mechanisms, due to the rigid mechanical coupling, if, due to normal machining or mounting tolerances, a first bolt 60 comes into contact with the respective pin 70 before the second bolt 60', the entire effort of the actuator 55 is concentrated on the point of contact of the first bolt 60, preventing the second bolt 60' from completing its travel and, consequently, the entire actuation mechanism stops. This results in a non-uniform and uncontrolled lock force.

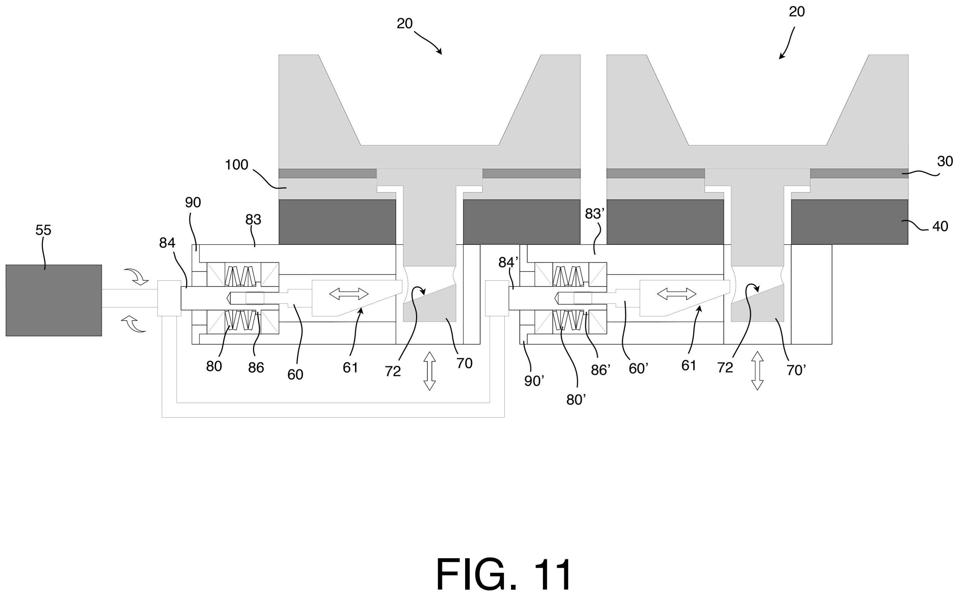

According to an embodiment illustrated in Figure 11, the stop-lock device comprises
a bolt movement assembly configured to impart an axial translation motion to the two bolts 60, 60'. For example, the bolt movement assembly comprises a main body 83, 83' and a hollow shaft 84, 84' for each bolt 60, 60'. The hollow shafts 84, 84' are arranged inside a respective main body 83, 83' and are connected to the actuator 55 by means of a transmission mechanism.

Preferably the actuator 55 is configured to integrally rotate both hollow shafts 84, 84', each around its own longitudinal axis, selectively in a first or a second direction, opposite to each other. Preferably, each bolt 60, 60' comprises a threaded inner surface and is inserted into a respective hollow shaft 84, 84' which, in turn, comprises a threaded inner surface.

Each bolt 60, 60' is constrained to an axial translation and prevented from rotating with respect to a fixed structure, preferably a respective main body 83, 83'. The bolt movement assembly may comprise an anti-rotation system, configured to ensure that a rotation of the hollow shaft 84, 84' impressed by the actuator 55, results in an axial translation motion of the bolts 60, 60' according to a screw-spindle screw kinematics. The stop-lock device also comprises a balancer assembly for each bolt 60, 60', comprising a yielding element 80, 80' configured to elastically deform under an axial load. Preferably, said yielding element 80, 80' is inserted in the thrust kinematic chain of a respective bolt 60, 60', and is configured to allow an axial translation of a bolt 60' up to its abutment position against a respective pin 70' when another bolt 60 reaches one of its abutment position against a respective pin 70. The balancer assembly thus guarantees an equalisation of the locking force between the two bolts 60, 60'.

According to embodiments, the balancer assembly comprises an abutment shoulder 90, 90' housed together with the yielding element 80, 80' inside each main body 83, 83'. Preferably, the yielding element configured to elastically deform under an axial load, is a stack of disc springs 80, 80', and is interposed between the respective abutment shoulder 90, 90' and a respective reaction shoulder 86, 86' formed on an outer end portion of each hollow shaft 84, 84'.

During operation, the actuation of the actuator 55 rotates the hollow shafts 84, 84' according to a predetermined direction of rotation, which, in turn, causes an axial translation of the bolts 60, 60' according to a predetermined direction, for example approaching the pins 70, 70'. As long as there is no axial resistance from the bolt 60, 60' the hollow shaft 84, 84' is only movable in rotation without the elastic element 80, 80' being compressed.

As soon as the first of the two bolts 60, 60' engages with a respective pin 70, 70', i.e. when the inclined surface of the first bolt 60 engages on the inclined surface 72 complementary to it formed on the first pin 70, the axial translation of the first bolt 60 stops.

The actuator 55, however, continues to induce the rotation of both the hollow shafts 84, 84', but since the first bolt 60 cannot translate further, the rotation of the first hollow shaft 84 causes an axial translation of said hollow shaft 84 in a direction opposite to the first predetermined axial translation direction of the bolt 60, moving away from the pin 70.

The axial translation in the opposite direction of the hollow shaft 84 translates the reaction shoulder 86 and leads it to push against a first yielding element 80, which, being locked by the abutment shoulder 90, begins to compress.

At the same time, the second bolt 60', whose axial translation is not yet hindered, continues its approach to the second pin 70'. When also the second bolt 60' engages with the second pin 70', each further rotation of the actuator 55 results in an axial translation of the second hollow shaft 84' in a direction opposite to the first predetermined axial translation direction of the second bolt 60', therefore a translation of the reaction shoulder 86' and, therefore, in the compression of a second yielding element 80'.

To ensure the equalization of the thrust force of the two bolt movement assemblies, the stop-lock device comprises a control system configured to stop said actuator 55 upon reaching a predetermined torque or position condition, corresponding to an equalized locking force on both bolts 60.

This solution also actively assists the unlocking step. By reversing the motion of the actuator 55, the bolt 60, 60' is recalled back by the reverse rotation of the hollow shaft 84, releasing the compression of the yielding element 80. The elastic energy thus released exerts a thrust, actively forcing the bolt 60 to retract and facilitating its disengagement from the pin 70, even in the event of high frictions.

From what is reported above, the position of the half-mould, the pin and the relative lock system will be subject to displacement on the plane X-Y in all those cases where the centre of the half-mould, which coincides with its point of constraint to the reference plate (heating, or technical plate that it may be) and ideally with the centre of the cavity contained in the half-mould, as discussed above, did not coincide with the centre of the reference plate from which the expansion of the latter departs, taking into account its system of constraint to the machine of the same (tertiary expansion). In this case, one would run again into the problem that, when the temperature of the reference plate varies, the position of the relative half-mould would also vary, giving rise to potential interference between the two half-moulds or in any case to instability of the thickness of the object to be produced.

Said problem, on the other hand, is solved in the event that the pin 70 finds its own centre in one of the insulating plates 100, which is the same where the actuation mechanism of the stop-lock device described above will have to find its own anchoring base and reference.

Therefore, the anchoring of the actuation mechanism 55, 60, as well as the centring of the pin 70, to the insulating plate 100, has the enormous advantage of definitively guaranteeing that the unchanged position of the half-moulds 10, 20 between "cold" and "hot" regimes, whatever the temperature level used for the latter (neutralization of tertiary expansion) is maintained.

Therefore, the combination of the central fixing of the half-moulds 10, 20, with the elimination, or at least limitation, of multi-cavity moulds by having the possibility of carrying out the fixings of independent single-cavity moulds and, finally, with the reference, as well as the anchoring, of the actuation mechanism 55, 60 of the centring lock device to the insulating plate 100 which, since it is not subject to thermal expansion does not generate dislocation of the half-moulds, allows neutralising the effects of shape instability of the half-moulds (primary expansion), the dislocation of the cavities in the multi-cavity mould (secondary expansion), as well as the dislocation of the half-moulds due to the expansion of the centring/fixing plate (tertiary expansion).

In addition, since the anchoring lock device is motorized and operable from the operator panel, a solution is also provided to the problems connected with disassembly and re-assembly times as well as the possibility of safe intervention for the operator.

The fixing of the half-moulds at their centre also offers, in principle, the possibility of alleviating the burden of said disassembly and re-assembly activities, since theoretically it is necessary to intervene exclusively on a single point constraint, which guarantees a "balanced" re-expansion of the moulds to new heating, since they are free, as mentioned, to expand in plan according to the directions X and Y starting from their own centre/point of constraint.

## Claims

1. A hot moulding assembly comprising:
- a pair of thermoforming half-moulds (10, 20) configured to cooperate with each other;
- wherein at least one half-mould of said pair of half-moulds (10, 20) comprises a pin (70) fixed thereto and comprising a through hole (72), and
- a stop-lock device comprising an actuation mechanism with an actuator (55) and at least one longitudinal bolt (60), configured to be inserted into the through hole (72) of said pin (70) to selectively lock said at least one half-mould (10, 20);
**characterized in that** said pin (70) is fixed to said at least one half-mould (10, 20) in such a position that its longitudinal axis coincides with the central axis of said at least one half-mould (10, 20).

2. Hot moulding assembly according to claim 1, **characterized in that** it comprises a plurality of operational plates associated with said at least one half-mould (10, 20), said plurality of operational plates comprising a technical plate (40, 50), a heating plate (30, 30') and an insulating plate (100), and wherein said actuation mechanism (55, 60) is engaged with said insulating plate (100) to lock said at least one half-mould (10, 20) to said insulating plate (100) during the thermoforming process.

3. Hot moulding assembly according to claim 2, **characterized in that** said insulating plate (100) is arranged between said technical plate (40, 50) and said heating plate (30, 30').

4. Hot moulding assembly according to any one of the preceding claims, **characterized in that** the through hole (72) of the pin (70) comprises an inclined wall, and the bolt (60) comprises, at one of its ends, a chamfer (61) with an inclination complementary to that of said inclined wall.

5. Hot moulding assembly according to any one of the preceding claims, **characterized in that** it comprises a second pair of half-moulds (10, 20), at least one half-mould of the second pair of half-moulds (10, 20) comprises a respective pin (70) fixed centrally to said at least one half-mould; wherein the stop-lock device comprises a second bolt (60'), configured to be inserted into the through hole (72) of a respective pin (70) of at least one half-mould of the second pair of half-moulds (10, 20), the actuator (55) being connected to both the first and second bolt (60, 60') for their simultaneous actuation.

6. Hot moulding assembly according to claim 5, **characterized in that** the actuation mechanism comprises two oppositely threaded lead screws connected to the actuator (55) and to the two bolts (60, 60') to induce the advancement of said bolts (60, 60') in mutually opposite directions.

7. Hot moulding assembly according to any one of the preceding claims, **characterized in that** said at least one half-mould (10, 20) comprises a recess (16, 26) formed at its central axis, said recess being configured to house a fixing end of said pin (70).

8. Hot moulding assembly according to claim 5, **characterized in that** the actuation mechanism comprises, for each bolt (60):
- a bolt movement assembly (83, 83', 84, 84') connected to the actuator (55) configured to impart an axial translation motion to a respective bolt (60, 60');
- a balancer assembly (80, 80', 90, 90') for each bolt (60, 60'), comprising a yielding element (80, 80') configured to elastically deform under an axial load.

9. Hot moulding assembly according to claim 7, **characterized in that** said yielding element comprises a stack of disc springs (80, 80').

10. Hot moulding assembly according to any one of claims 8 to 9, **characterized in that** it comprises a control system configured to stop said actuator (55) upon reaching a predetermined torque or position condition, corresponding to an equalized locking force on both bolts (60, 60').
